(19) Europäisches Patentamt
European Patent Office
Office européen des brevets

(11) **EP 4 794 044 A1**

(12) **EUROPEAN PATENT APPLICATION**
published in accordance with Art. 153(4) EPC

(43) Date of publication:
**19.08.2026 Bulletin 2026/34**

(21) Application number: **25869641.8**

(22) Date of filing: **24.11.2025**

(51) International Patent Classification (IPC):
***H01M 10/0525*** (2010.01) ***H01M 4/36*** (2006.01)
***H01M 4/587*** (2010.01) ***H01M 4/38*** (2006.01)
***H01M 4/133*** (2010.01) ***H01M 4/134*** (2010.01)
***H01M 4/04*** (2006.01) ***H01M 10/058*** (2010.01)
***H01M 50/204*** (2021.01) ***H01M 4/02*** (2006.01)

(52) Cooperative Patent Classification (CPC):
**H01M 4/02; H01M 4/04; H01M 4/133; H01M 4/134; H01M 4/36; H01M 4/38; H01M 4/587; H01M 10/0525; H01M 10/058; H01M 50/204;**
Y02E 60/10

(86) International application number:
**PCT/KR2025/019550**

(87) International publication number:
**WO 2026/134740 (25.06.2026 Gazette 2026/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.12.2024 KR 20240191357**

(71) Applicant: **LG ENERGY SOLUTION, LTD.**
**Seoul 07335 (KR)**

(72) Inventors:
- **HONG, Doyoung**
  **Daejeon 34122 (KR)**
- **KWON, Yohan**
  **Daejeon 34122 (KR)**
- **LEE, Ilha**
  **Daejeon 34122 (KR)**
- **LIM, Sung Chul**
  **Daejeon 34122 (KR)**
- **CHAE, Jonghyun**
  **Daejeon 34122 (KR)**

(74) Representative: **Hoffmann Eitle**
**Patent- und Rechtsanwälte PartmbB**
**Arabellastraße 30**
**81925 München (DE)**

(54) **LITHIUM SECONDARY BATTERY, AND BATTERY MODULE AND BATTERY PACK COMPRISING SAME**

(57) The present invention relates to a lithium secondary battery including a pre-lithiated negative electrode and a positive electrode, in which a charge capacity N/P ratio (%) expressed by Formula 1 satisfies a range of 108% or more and 123% or less, thereby securing life performance, and to a battery module and a battery pack including the same.

[Figure 1]

10
20
30
40
50
100
200

EP 4 794 044 A1

## Description

[Technical Field]

This application claims priority to and the benefit of Korean Patent Application No. 10-2024-0191357 filed in the Korean Intellectual Property Office on December 19, 2024, the entire contents of which are incorporated herein by reference.

The present invention relates to a lithium secondary battery, and a battery module and a battery pack including the same.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that uses such electrochemical energy, and the specified range of use thereof tends to be gradually expanding.

Along with the technology development and increased demand for mobile devices, the demand for secondary batteries as energy sources is increasing sharply. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

Note that lithium secondary batteries undergo lithium loss starting from the first charge after a battery is manufactured. During subsequent charge and discharge cycles and high-temperature storage periods, lithium loss occurs continuously, even in very small amounts, and degradation of the battery progresses. To compensate for such lithium loss, a pre-lithiation process in which lithium is additionally introduced into a battery prior to operation of the battery is applied.

[Detailed Description of the Invention]

[Technical Problem]

The present invention has been made in an effort to provide a lithium secondary battery capable of preventing lithium plating (Li-plating) and securing life performance, and a battery module and battery pack including the same.

[Technical Solution]

An exemplary embodiment of the present specification provides a lithium secondary battery including a pre-lithiated negative electrode; and a positive electrode, wherein
a charge capacity N/P ratio (%) expressed by Formula 1 is 108% or more and 123% or less:

[Formula 1]

$$(A - B)/C \times 100$$

in Formula 1 above,
A is a charge capacity ($mAh/cm^2$) of the pre-lithiated negative electrode,
B is a pre-lithiation capacity ($mAh/cm^2$) of the pre-lithiated negative electrode, and
C is a charge capacity ($mAh/cm^2$) of the positive electrode.

An exemplary embodiment of the present specification provides a battery module or a battery pack including the above-described lithium secondary battery.

An exemplary embodiment of the present specification provides a battery pack including the battery module described above.

Further, an exemplary embodiment of the present specification provides a method for manufacturing a lithium secondary battery including: preparing a pre-lithiated negative electrode; and preparing a positive electrode, wherein

a charge capacity N/P ratio (%) expressed by Formula 1 is 108% or more and 123% or less:

[Formula 1]

$$(A - B)/C \times 100$$

in Formula 1 above,
A is a charge capacity ($mAh/cm^2$) of the pre-lithiated negative electrode,
B is a pre-lithiation capacity ($mAh/cm^2$) of the pre-lithiated negative electrode, and
C is a charge capacity ($mAh/cm^2$) of the positive electrode.

[Advantageous Effects]

According to an exemplary embodiment of the present specification, a lithium secondary battery in which lithium plating (Li-plating) or an increase in resistance due to capacity reversal between a positive electrode and a negative electrode is prevented by having an appropriate level of an N/P ratio in consideration of a charge capacity of a negative electrode reflecting pre-lithiation, and thus life performance is improved, as well as a battery module and a battery pack including the lithium secondary battery can be provided.

[Brief Description of Drawings]

FIG. 1 is a diagram showing a laminated structure of a lithium secondary battery according to an exemplary embodiment of the present specification.
FIG. 2 is a flowchart showing a method for manufacturing a pre-lithiated negative electrode according to an exemplary embodiment of the present specification.
FIG. 3 is a graph showing a capacity retention rate versus charge and discharge cycles of Examples and Comparative Examples of the present specification.

[Best Mode]

Before describing the present invention, some terms are first defined.
As used herein, when it is described that one part "includes", "comprises" or "has" one constituent element, unless otherwise specifically described, this does not mean that another constituent element is excluded, but means that another constituent element may be further included.
It will be further understood that the terms "comprises", "includes" or "have" when used in the present specification are intended to specify the presence of stated features, integers, steps, constitutional elements and/or combinations thereof, and are not intended to preclude the possibility of the presence or addition of one or more other features, integers, steps, constitutional elements, and/or combinations thereof.
In the present specification, when a part of a layer or the like is referred to as being "above" or "on" another part, it may be directly on the other element or an intervening element may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.
In the present specification, when one member is referred to as being provided on "both surfaces" of another member, this means that one member is provided on one surface of another member, and one member is also provided on another surface corresponding to the one surface. In addition, this includes not only a case where one member is in direct contact with another member, but also a case where still another member is present between the two members.
In the present specification, 'p to q' means a range of 'p or more and q or less'.
In the present specification, the terms such as "~unit" and "device" refer to units for processing at least one function or operation.
In the present specification, "Dn" refers to a particle size distribution, and refers to a particle diameter (average particle diameter) at the n% point in the cumulative distribution of the number of particles according to the particle diameter. That is, $D_{50}$ is the particle diameter at the 50% point of the cumulative distribution of the number of particles according to the particle diameter, $D_{90}$ is the particle diameter at the 90% point of the cumulative distribution of the number of particles according to the particle diameter, and $D_{10}$ is the particle diameter at the 10% point of the cumulative distribution of the

number of particles according to the particle diameter. Note that the average particle diameter may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In an exemplary embodiment of the present specification, the particle size or particle diameter may refer to the average diameter or representative diameter of each grain forming metal powder.

As used herein, the singular forms of terms, such as "a" and "an", are intended to include the plural forms as well, unless the context clearly indicates otherwise.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

Hereinafter, preferred exemplary embodiments of the present invention will be described in detail. However, it should be understood that the exemplary embodiments of the present invention may be modified in various forms and the scope of the present invention is not limited to the exemplary embodiments described below.

**<Lithium Secondary Battery>**

The present inventors intend to use a negative electrode with pre-lithiation applied so as to compensate for irreversible capacity by introducing lithium in advance that would be lost during charge and discharge processes, thereby improving capacity or cycle performance of the battery. However, when a negative electrode to which pre-lithiation is applied is used, since a portion of lithium is pre-charged in the negative electrode, the present inventors recognized that it is important to define an N/P ratio (%), which is one of major factors that should be necessarily considered in designing a battery.

Accordingly, the present inventors studied performance changes according to a charge capacity N/P ratio (%) of a battery using a positive electrode and a pre-lithiated negative electrode, and as a result, derived an appropriate level of a charge capacity N/P ratio (%) reflecting a pre-lithiation capacity and defined the same by Formula 1 below.

A lithium secondary battery according to an exemplary embodiment of the present specification includes a pre-lithiated negative electrode, and a positive electrode, wherein a charge capacity N/P ratio (%) expressed by the following Formula 1 is 108% or more and 123% or less.

[Formula 1]

$$(A - B)/C \times 100$$

in Formula 1 above,

A is a charge capacity ($mAh/cm^2$) of the pre-lithiated negative electrode,

B is a pre-lithiation capacity ($mAh/cm^2$) of the pre-lithiated negative electrode, and

C is a charge capacity ($mAh/cm^2$) of the positive electrode.

In the present specification, the charge capacity N/P ratio (%) expressed by Formula 1 above refers to a charge capacity N/P ratio (%) of a lithium secondary battery reflecting a pre-lithiation capacity, and represents, as a percentage, a charge capacity of a negative electrode reflecting pre-lithiation relative to a charge capacity of a positive electrode. In this case, the charge capacity (A - B) of the negative electrode reflecting pre-lithiation is obtained by subtracting the pre-lithiation capacity (B) from the charge capacity (A) of the pre-lithiated negative electrode.

The charge capacity N/P ratio (%) expressed by Formula 1 of the lithium secondary battery according to an exemplary embodiment of the present specification may be 108% or more and 123% or less, specifically 108.5% or more and 120% or less, and more specifically 110% or more and 119.5% or less.

If the charge capacity N/P ratio (%) reflecting a pre-lithiation capacity of a lithium secondary battery including a pre-lithiated negative electrode is below the above range, capacity reversal between the positive electrode and the negative electrode may occur due to tolerances generated during a process, and in a region where the capacity reversal between the positive electrode and the negative electrode occurs, overcharging may occur, and thus lithium ions not used on a surface of the positive electrode may be plated as metal (Li-plating). This may eventually lead to the formation of dendrites, which can cause a short circuit and rapid degradation of the battery life. If the N/P ratio (%) reflecting a pre-lithiation capacity of a lithium secondary battery exceeds the above range, Li-plating does not occur, but the battery life performance deteriorates due to an increase in resistance, and the energy density may also deteriorate.

However, the present invention is characterized in that, by including a pre-lithiated negative electrode, irreversible capacity is compensated, thereby improving capacity or cycle performance of a battery, while lithium plating (Li-plating) is prevented by satisfying a charge capacity N/P ratio (%) within the above range, and battery life performance can also be secured.

In the present specification, the lithium secondary battery may be, for example, a battery immediately after an activation process, but may also be a battery after a certain period of time has elapsed from manufacture.

The lithium secondary battery according to an embodiment of the present specification may have a capacity retention rate of 94% or more after 150 charge and discharge cycles, wherein, during the charge and discharge cycles, charging is performed at 1C with an upper voltage of 4.35 V in a constant current/constant voltage (CC/CV) mode with a cut-off current of 0.05C, and discharging is performed at 5C with a lower voltage of 2.5 V in a constant current (CC) mode.

The lithium secondary battery according to an exemplary embodiment of the present specification may have a capacity retention rate of 94% or more, specifically 94.5% or more, and more specifically 95% or more, after 150 charge and discharge cycles under the charge and discharge conditions. This indicates a lithium secondary battery that exhibits excellent life performance by satisfying the charge capacity N/P ratio (%) within an appropriate range according to an exemplary embodiment of the present specification.

The lithium secondary battery according to an exemplary embodiment of the present specification includes a pre-lithiated negative electrode, and a positive electrode, and the pre-lithiated negative electrode and the positive electrode will be described below.

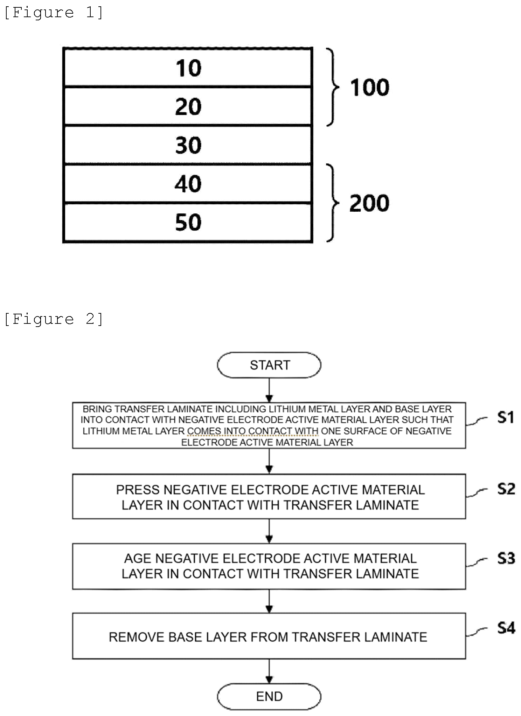

FIG. 1 is a diagram showing a laminated structure of a lithium secondary battery according to an exemplary embodiment of the present specification. Specifically, a pre-lithiated negative electrode 100 including a negative electrode active material layer 20 on one surface of a negative electrode current collector layer 10 can be seen, a positive electrode 200 including a positive electrode active material layer 40 on one surface of a positive electrode current collector layer 50 can be seen, and it is shown that the pre-lithiated negative electrode 100 and the positive electrode 200 are stacked with a separator 30 interposed therebetween.

**<Pre-lithiated Negative Electrode>**

A lithium secondary battery according to an exemplary embodiment of the present specification includes a pre-lithiated negative electrode. In this case, the pre-lithiated negative electrode may be one in which at least one surface of a negative electrode active material layer is pre-lithiated, and a method for manufacturing the pre-lithiated negative electrode will be described below.

In an exemplary embodiment of the present specification, a charge capacity (A) (mAh/cm$^2$) of the pre-lithiated negative electrode may be 3.5 mAh/cm$^2$ or more and 6.0 mAh/cm$^2$ or less.

In the present specification, the charge capacity (A) of the pre-lithiated negative electrode refers to a maximum charge capacity of the pre-lithiated negative electrode, and may be measured after fabricating a negative electrode half-cell with lithium metal as a counter electrode and performing one cycle of charging at 0.1C to 0.005 V in a CC/CV mode (a cut-off current of 0.005C) and discharging at 0.1C to 1.5 V in a CC mode.

In an exemplary embodiment of the present specification, the charge capacity (mAh/cm$^2$) of the pre-lithiated negative electrode may be 3.5 mAh/cm$^2$ or more and 6.0 mAh/cm$^2$ or less, specifically 4 mAh/cm$^2$ or more and 5.5 mAh/cm$^2$ or less, and more specifically 4.2 mAh/cm$^2$ or more and 4.808 mAh/cm$^2$ or less.

When the charge capacity (mAh/cm$^2$) of the pre-lithiated negative electrode falls within the above range, energy density of the battery can be improved and excellent rapid charging performance can also be secured.

In addition, in an exemplary embodiment of the present specification, the pre-lithiation capacity (B) (mAh/cm$^2$) of the pre-lithiated negative electrode may be 0.1 mAh/cm$^2$ or more and 1.0 mAh/cm$^2$ or less.

In the present specification, the pre-lithiation capacity (mAh/cm$^2$) may be measured as a difference between charge capacities measured by fabricating a half-cell of a pre-lithiated negative electrode and a half-cell of a pristine negative electrode manufactured in the same manner as the pre-lithiated negative electrode except that pre-lithiation is not applied, and performing charging at 0.1C to 0.005 V in a CC/CV mode (a cut-off current of 0.005C).

Specifically, each of the half-cells may be manufactured by preparing an electrode assembly in which the pre-lithiated negative electrode or the pristine negative electrode is used as a working electrode, a lithium metal thin film having a thickness of 100 μm and cut into a circular shape of 1.7671 cm$^2$ is used as a counter electrode, and a polyethylene separator is interposed between the working electrode and the counter electrode, and then accommodating the electrode assembly in a coin-type case and injecting an electrolyte solution.

The electrolyte solution used during the manufacture of the half-cell may be prepared by adding $LiPF_6$ as a lithium salt at a concentration of 1.0 M to an organic solvent in which ethylene carbonate (EC), ethyl methyl carbonate (EMC), and diethyl carbonate (DEC) are mixed in a volume ratio of 20:10:70.

In an exemplary embodiment of the present specification, the pre-lithiation capacity (mAh/cm$^2$) of the pre-lithiated negative electrode may be 0.1 mAh/cm$^2$ or more and 1.0 mAh/cm$^2$ or less, specifically 0.12 mAh/cm$^2$ or more and

0.8 mAh/cm$^2$ or less, and more specifically 0.165 mAh/cm$^2$ or more and 0.5 mAh/cm$^2$ or less.

When the pre-lithiation capacity (mAh/cm$^2$) according to an exemplary embodiment of the present specification falls within the above range, a lithium secondary battery having excellent capacity and life characteristics can be implemented. Specifically, if the pre-lithiation capacity of the negative electrode is too small, it may be difficult to secure sufficient energy density, and if the pre-lithiation capacity of the negative electrode is too large, overcharging may occur due to NP ratio reversal between the positive electrode and the negative electrode, and rapid battery degradation may occur due to Li-plating.

In an exemplary embodiment of the present specification, the pre-lithiated negative electrode may be one in which one surface of a negative electrode active material layer is pre-lithiated by transferring a lithium metal layer thereto, and more specifically, may be one in which at least one surface of the negative electrode active material layer is pre-lithiated by transferring a transfer laminate including a lithium metal layer and a base layer thereto.

The pre-lithiated negative electrode according to an exemplary embodiment of the present specification is one in which at least one surface of a negative electrode active material layer is pre-lithiated by a lithium direct contact method in order to improve Coulombic efficiency by addressing irreversible capacity loss, and features lower cell degradation during battery operation and a faster reaction rate, compared with pre-lithiation by an SLMP method or an electrochemical method. In particular, among the lithium direct contact methods, a dry pre-lithiation process is applied in which pre-lithiation proceeds from the time of contact between the negative electrode active material layer and the lithium metal and therefore pre-lithiation can proceed faster than in a wet pre-lithiation process.

The pre-lithiated negative electrode according to an exemplary embodiment of the present specification may be manufactured through a step of transferring a transfer laminate including a lithium metal layer and a base layer such that the lithium metal layer comes into contact with at least one surface of the negative electrode active material layer.

In an exemplary embodiment of the present specification, the transfer laminate may include a lithium metal layer. The lithium metal layer is a layer including lithium metal for pre-lithiating one surface of the electrode active material layer, and a commonly used Li metal foil may be used, but no such limitation is intended.

In an exemplary embodiment of the present specification, a thickness of the lithium metal layer may be 0.1 μm or more and 15 μm or less, specifically 1 μm or more and 10 μm or less, and more specifically 1 μm or more and 6 μm or less.

When the thickness of the lithium metal layer falls within the above range, the irreversible capacity during charging and discharging of the lithium secondary battery can be sufficiently compensated.

In an exemplary embodiment of the present specification, the transfer laminate may include a base layer. In this case, the base layer is an essential component for supporting the lithium metal layer during the process of preparing the transfer laminate, and can be used without limitation as long as it has the characteristics of being able to withstand process conditions such as high temperatures during the step of depositing the lithium metal layer and to prevent the problem of reverse peeling, where the lithium metal layer is transferred onto the base layer during the process of transferring the transfer laminate.

In an exemplary embodiment of the present specification, the base layer may include one or more selected from the group consisting of polyethylene terephthalate (PET), polyimide (PI), poly(methylmethacrylate) (PMMA), polypropylene, polyethylene, and polycarbonate, specifically, one or more selected from the group consisting of polyethylene terephthalate (PET), polyimide (PI), and polyethylene, and more specifically, polyethylene terephthalate (PET).

In an exemplary embodiment of the present specification, a thickness of the base layer may fall within a range of 1 μm or more and 300 μm or less, specifically 5 μm or more and 200 μm or less, and more specifically 10 μm or more and 100 μm or less.

When the thickness of the base layer falls within the above range, the transfer of the lithium metal layer to the negative electrode active material layer can occur efficiently and the reverse transfer can be prevented.

In an exemplary embodiment of the present specification, the transfer laminate may be manufactured by any one of the methods of depositing, roll-pressing, and melting the lithium metal layer on one surface of the base layer. Specifically, in an exemplary embodiment of the present specification, the transfer laminate including the lithium metal layer and the base layer may be manufactured by any one of the methods of depositing and roll-pressing a lithium metal layer on one surface of the base layer, and more specifically, may be manufactured by the method of depositing a lithium metal layer on one surface of the base layer.

In an exemplary embodiment of the present specification, the method for depositing the lithium metal layer to one surface of the base layer may be selected from a physical vapor deposition (PDV) method and a chemical vapor deposition (CVD) method, and among the physical vapor deposition methods, a thermal evaporation method may be mainly used. However, no such limitation is intended, and various deposition methods used in the art may be used.

In an exemplary embodiment of the present specification, the method of roll-pressing the lithium metal layer on one surface of the base layer may involve bringing a lithium foil into contact with one surface of the base layer and then forming a lithium thin film having a thickness of 10 μm or less through a continuous roll-pressing process.

That is, the transfer laminate according to an exemplary embodiment of the present specification may be one in which a lithium metal layer and a base layer are sequentially stacked.

In an exemplary embodiment of the present specification, the transfer laminate may further include a release layer between the lithium metal layer and the base layer, and specifically, the lithium metal layer, the release layer, and the base layer may be sequentially stacked. In this case, the release layer serves as a means for facilitating removal of the base layer after transfer completion of the transfer laminate, and can prevent the lithium metal layer from being removed together when the base layer is removed.

In an exemplary embodiment of the present specification, the release layer may include one or more selected from the group consisting of polycarbonate (PC), polydimethylsiloxane (PDMS), polymethylhydrosiloxane (PMHS), polyimide (PI), and polymethylmethacrylate (PMMA), specifically one or more selected from the group consisting of polycarbonate (PC), polydimethylsiloxane (PDMS), and polymethylmethacrylate (PMMA), and more specifically polymethylmethacrylate (PMMA).

In an exemplary embodiment of the present specification, a thickness of the release layer may be 0.1 μm or more and 5 μm or less, specifically 0.2 μm or more and 3 μm or less, and more specifically 0.5 μm or more and 1 μm or less.

In an exemplary embodiment of the present specification, when the thickness of the release layer falls within the above range, sufficient release force can be secured, and when the base layer is removed after transfer completion of the transfer laminate, the release layer may be removed together or may remain on the surface of the lithium metal layer. However, even if the release layer remains on the surface of the lithium metal layer, it does not play a role in blocking the release of heat, and thus may not accelerate the formation of by-products.

In an exemplary embodiment of the present specification, the release layer may be formed by a coating method. For example, the coating method may be a method selected from the group consisting of dip coating, spray coating, spin coating, die coating, gravure coating, micro-gravure coating, comma coating, and roll coating, but is not limited thereto, and various coating methods that can be used in the art to form a coating layer may be used.

The pre-lithiated negative electrode according to an exemplary embodiment of the present specification may be specifically manufactured through steps of bringing a transfer laminate including a lithium metal layer and a base layer into contact with the negative electrode active material layer such that the lithium metal layer comes into contact with at least one surface of the negative electrode active material layer, pressing the negative electrode active material layer in contact with the transfer laminate, aging the negative electrode active material layer in contact with the transfer laminate, and removing the base layer from the transfer laminate.

In an exemplary embodiment of the present specification, through the step of pressing the negative electrode active material layer in contact with the transfer laminate, pre-lithiation can proceed more actively in the negative electrode active material layer, and there is an effect that, despite a high energy density, a thickness of the negative electrode can be formed to be thin.

In this case, the pressing step may be performed by bringing the transfer laminate into contact with the negative electrode active material layer such that the lithium metal layer comes into contact with at least one surface of the negative electrode active material layer, and then performing a roll pressing process. That is, in an exemplary embodiment of the present specification, the step of pressing the negative electrode active material layer in contact with the transfer laminate is a step of causing a pre-lithiation reaction to actively occur between the negative electrode active material layer and the lithium metal layer by applying a load through a roller. The load is expressed in units of kgf because it is applied linearly while passing through the roller.

In an exemplary embodiment of the present specification, the pressing step may involve applying a load of 10 kgf or more and 600 kgf or less, specifically 100 kgf or more and 500 kgf or less, and more specifically 200 kgf or more and 500 kgf or less.

In an exemplary embodiment of the present specification, when the load during the pressing step falls within the above range, pre-lithiation by transfer can proceed more actively, and at the same time, pre-lithiation progresses within an appropriate range, thereby making it possible to minimize residual lithium on the negative electrode surface and loss of lithium introduced. In addition, the negative electrode can be formed thin despite the high energy density.

That is, the pressing step according to an exemplary embodiment of the present specification may involve bringing the transfer laminate into contact with the negative electrode active material layer such that the lithium metal layer comes into contact with one surface or both surfaces of the negative electrode active material layer, and then performing transfer through a roll pressing process while applying a load within the above range. The contacting step and the pressing step may be performed sequentially or simultaneously, and there is no limitation thereto.

As an example, when the steps of bringing the transfer laminate into contact with one surface of the negative electrode active material layer and pressing the negative electrode active material layer in contact with the transfer laminate are performed sequentially, the pre-lithiation reaction may begin from a moment at which one point of the transfer laminate is brought into contact with one point of one surface of the negative electrode active material layer, or the pre-lithiation reaction may begin from a moment at which one point of the negative electrode active material layer in contact with the transfer laminate is pressed, and the contacting step and the pressing step may have a time difference of several seconds to several minutes.

For example, when the steps of bringing the transfer laminate into contact with one surface of the negative

electrode active material layer and pressing the negative electrode active material layer in contact with the transfer laminate are performed simultaneously, pressing at one point of the negative electrode active material layer in contact with the transfer laminate may start at the same time as one point of the transfer laminate is brought into contact with one point of one surface of the negative electrode active material layer, and in this case, the pre-lithiation reaction may begin from a moment at which the contacting and pressing begin, or may begin after several seconds to several minutes.

In an exemplary embodiment of the present specification, the aging step is a step of storing while one surface of the negative electrode active material layer reacts with the lithium metal layer to undergo pre-lithiation.

In an exemplary embodiment of the present specification, the aging step may be performed before the step of pressing the negative electrode active material layer in contact with the transfer laminate, may be performed simultaneously with the pressing step, or may be performed after the pressing step, and there is no limitation thereto.

As an example, the aging may start several seconds to several minutes before pressing starts at one point of the negative electrode active material layer in contact with the transfer laminate. In this case, the aging step may begin simultaneously with the contacting step of the transfer laminate, or may begin within several seconds to several minutes from the contacting step. In this case, the pre-lithiation reaction may proceed before the pressing step, and the pressing step may be a step for promoting the pre-lithiation reaction.

As an example, the aging may begin simultaneously with the start of pressing at one point of the negative electrode active material layer in contact with the transfer laminate. In this case, the contacting step of the transfer laminate, the pressing step, and the aging step may all begin simultaneously, or the pressing step and the aging step may begin within several seconds to several minutes from the contacting step.

As an example, the aging may begin from a moment at which the pressing is completed at one last point of the negative electrode active material layer in contact with the transfer laminate.

In an exemplary embodiment of the present specification, the aging step may be performed at a temperature ranging from 0°C to 40°C, specifically 10°C to 30°C, and more specifically 20°C to 28°C.

In an exemplary embodiment of the present specification, the aging step may be performed at room temperature, but there is no limitation thereto, and the pre-lithiation reaction rate can be controlled within an appropriate range by adjusting the temperature range of the aging step to be within the specific range.

In an exemplary embodiment of the present specification, the aging step may be performed until the pre-lithiation of one surface of the negative electrode active material layer is completed. In this case, whether the pre-lithiation has been completed can be determined by visually observing a change in color of the electrode surface. Specifically, it can be confirmed whether the pre-lithiation has been completed by observing that the surface of the negative electrode, which is silver like lithium metal immediately after lithium transfer, has completely changed to the inherent color (black) of the negative electrode after completion of the pre-lithiation. In this case, since the base layer is transparent, the silver color of the lithium metal or the inherent color of the negative electrode can be confirmed regardless of whether the base layer is peeled off.

In an exemplary embodiment of the present specification, the step of removing the base layer from the transfer laminate is a step of preventing release of heat generated by the exothermic pre-lithiation reaction by the base layer, thereby preventing formation of by-products on a surface of the negative electrode for which pre-lithiation has been completed.

In an exemplary embodiment of the present specification, the step of removing the base layer may be performed simultaneously with completion of the pressing step, may be performed during the aging step, or may be performed after completion of the pre-lithiation of one surface of the negative electrode active material layer, and there is no limitation thereto.

For example, the removal of the base layer may start at the same time as completion of the pressing at one point of the negative electrode active material layer in contact with the transfer laminate. That is, at a moment at which one point of the negative electrode active material layer in contact with the transfer laminate passes the above-described roller for pressing, the removal of the base layer may start at the corresponding point.

For example, during the process of aging the negative electrode active material layer in contact with the transfer laminate, the removal of the base layer may start from one point of the transfer laminate. In this case, the step of removing the base layer may start within several seconds to several minutes from the aging step, or may start from a final moment at which the aging step is completed.

For example, the removal of the base layer may start after completion of the pre-lithiation of one surface of the negative electrode active material layer. In this case, a chemical reaction between the negative electrode active material layer and the lithium metal layer can be promoted by performing all of the step of bringing the transfer laminate into contact with the negative electrode active material layer, and the pressing step, and the aging step without removing the base layer, thereby suppressing the formation of residual lithium on the electrode surface.

Specifically, the step of removing the base layer according to an exemplary embodiment of the present specification may be performed after completion of the pre-lithiation of one surface of the negative electrode active material layer.

In an exemplary embodiment of the present specification, the pre-lithiation may be a process in which a pre-lithiation reaction begins between the negative electrode active material layer and the lithium metal layer from a point in time at which the lithium metal layer comes into contact with one surface of the negative electrode active material layer, within several seconds to several minutes after the contact of the lithium metal layer, or from a point in time at which the base layer is removed.

In an exemplary embodiment of the present specification, the pre-lithiation reaction may be completed within several days, within 24 hours, or within several seconds to several minutes from the point in time at which the lithium metal layer comes into contact with one surface of the negative electrode active material layer.

FIG. 2 is a flowchart showing a method for manufacturing a pre-lithiated negative electrode according to an exemplary embodiment of the present specification. Specifically, FIG. 2 shows a method for manufacturing a pre-lithiated negative electrode, including a step (S1) of bringing a transfer laminate including a lithium metal layer and a base layer into contact with the negative electrode active material layer such that the lithium metal layer comes into contact with one surface of a negative electrode active material layer; a step (S2) of pressing the negative electrode active material layer in contact with the transfer laminate; a step (S3) of aging the negative electrode active material layer in contact with the transfer laminate; and a step (S4) of removing the base layer from the transfer laminate.

In this case, the method for manufacturing a pre-lithiated negative electrode may further include a step (not shown) of providing a negative electrode active material layer on at least one surface of a negative electrode current collector layer, and this step may be performed before the step S1, but there is no limitation thereto.

In another exemplary embodiment of the present specification, a method for manufacturing a lithium secondary battery may include the steps of preparing a pre-lithiated negative electrode; and preparing a positive electrode, wherein a charge capacity N/P ratio (%) expressed by the following Formula 1 may be 108% or more and 123% or less:

[Formula 1]

$$(A - B)/C \times 100$$

in Formula 1 above,

A is a charge capacity ($mAh/cm^2$) of the pre-lithiated negative electrode,

B is a pre-lithiation capacity ($mAh/cm^2$) of the pre-lithiated negative electrode, and

C is a charge capacity ($mAh/cm^2$) of the positive electrode.

In the method for manufacturing a lithium secondary battery according to another exemplary embodiment of the present specification, the step of preparing a pre-lithiated negative electrode may include the steps of bringing a transfer laminate including a lithium metal layer and a base layer into contact with the negative electrode active material layer such that the lithium metal layer comes into contact with at least one surface of the negative electrode active material layer; pressing the negative electrode active material layer in contact with the transfer laminate; aging the negative electrode active material layer in contact with the transfer laminate; and removing the base layer from the transfer laminate, and the above description related to the pre-lithiated negative electrode may be applied in the same manner to each step.

In an exemplary embodiment of the present specification, the negative electrode active material layer may be formed by applying and drying a negative electrode slurry on at least one surface of a negative electrode current collector layer.

In an exemplary embodiment of the present specification, the negative electrode slurry may include a negative electrode active material layer composition and a slurry solvent.

In an exemplary embodiment of the present specification, a solid content of the negative electrode slurry may fall within a range of 5% or more and 40% or less, specifically 7% or more and 35% or less, and more specifically 10% or more and 30% or less.

The solid content of the negative electrode slurry may refer to a content of the negative electrode active material layer composition included in the negative electrode slurry, and may refer to a content of the negative electrode active material composition based on 100 parts by weight of the negative electrode slurry.

When the solid content of the negative electrode slurry falls within the specified range, an appropriate viscosity is secured when forming a negative electrode active material layer, thereby minimizing particle agglomeration of the negative electrode active material layer composition and enabling efficient formation of the negative electrode active material layer.

In an exemplary embodiment of the present specification, the slurry solvent is not limited thereto as long as it can dissolve the negative electrode active material layer composition. For example, the slurry solvent may be water (e.g., distilled water) or NMP.

According to an exemplary embodiment of the present specification, the negative electrode active material layer

may be formed by applying and drying the negative electrode slurry on the negative electrode current collector layer, and through the drying step, the slurry solvent in the negative electrode slurry may be dried.

In an exemplary embodiment of the present specification, the negative electrode active material layer composition may include a negative electrode active material described below; a negative electrode conductive material; and a negative electrode binder, and the negative electrode active material may include one or more of a carbon-based active material and a silicon-based active material.

In other words, the pre-lithiated negative electrode according to an exemplary embodiment of the present specification may include one or more of a carbon-based active material and a silicon-based active material as the negative electrode active material.

The pre-lithiated negative electrode according to an exemplary embodiment of the present specification may include one or more of a carbon-based active material and a silicon-based active material as the negative electrode active material, and the silicon-based active material may include one or more selected from the group consisting of Si, silicon oxide, Si/C, and a Si alloy.

Specifically, in an exemplary embodiment of the present specification, the silicon-based active material may include one or more selected from the group consisting of Si and silicon oxide, and more specifically, the silicon-based active material may include Si.

In an exemplary embodiment of the present specification, for the silicon-based active material, pure silicon (Si) may be particularly used as the silicon-based active material. Using pure silicon (Si) as a silicon-based active material may mean that, based on 100 parts by weight of the total silicon-based active material as described above, pure Si particles, which are not combined with other particles or elements, are included within the above range.

In an exemplary embodiment of the present specification, an average particle diameter ($D_{50}$) of the silicon-based active material may be 1 μm to 10 μm, specifically 2 μm to 8 μm, and more specifically 3 μm to 7 μm. When the average particle diameter ($D_{50}$) is below the lower limit of the above range, the specific surface area of the silicon-based active material may increase excessively, causing the viscosity of the negative electrode slurry to increase excessively, and as a result, the particles constituting the negative electrode slurry may not be dispersed smoothly. In addition, when the average particle diameter ($D_{50}$) of the silicon-based active material is excessively small, the contact area between the negative electrode active material and the conductive material by a composite composed of the conductive material and the binder in the negative electrode slurry is reduced, so the likelihood of disconnection of the conductive network is increased, which may decrease the capacity retention rate. On the other hand, when the average particle diameter ($D_{50}$) exceeds the upper limit of the above range, excessively large silicon-based active materials are present, making the surface of the negative electrode uneven and possibly causing non-uniform current density during charging and discharging. In addition, when the average particle diameter ($D_{50}$) of the silicon-based active material is excessively large, the phase stability of the negative electrode slurry becomes unstable, which may result in a decrease in processability and a decrease in the capacity retention rate of the battery.

Note that since the silicon-based active material has a significantly higher capacity than that of graphite-based active materials used in the related art, attempts to apply it are increasing, but the volume expansion rate thereof is high during the charging and discharging, which reduces the life of the battery. Therefore, in order to suppress this, the negative electrode active material according to an exemplary embodiment of the present specification may use the silicon-based active material and the carbon-based active material in combination.

In an exemplary embodiment of the present specification, the carbon-based active material may include one or more selected from the group consisting of graphite such as natural graphite or artificial graphite, carbon fiber, non-graphitizable carbon, carbon black, carbon nanotubes, fullerene, and activated carbon, and specifically, may include one or more selected from the group consisting of natural graphite and artificial graphite.

When the carbon-based active material is used as the negative electrode active material according to an exemplary embodiment of the present specification, reversible intercalation and deintercalation of lithium ions are possible, and structural and electrical properties can be maintained. Among these, graphite-based active materials can ensure the life characteristics of batteries due to their excellent reversibility. Since the graphite-based active material has a low discharge voltage of -0.2 V with respect to lithium, a battery using the graphite-based active material can exhibit a high discharge voltage of 3.6 V, and thus can provide many advantages in terms of energy density of a lithium secondary battery.

In an exemplary embodiment of the present specification, when artificial graphite is used as the carbon-based active material, the orientation degree is relatively low during electrode press-rolling, enabling favorable lithium ion intercalation/deintercalation characteristics. Therefore, the rapid charging performance of the battery is excellent, and the degree of expansion due to charging and discharging is low, enabling excellent lifetime characteristics.

In an exemplary embodiment of the present specification, when natural graphite is used as the carbon-based active material, the output and capacity of the lithium secondary battery are improved, and the excellent adhesion allows a reduced amount of binder used or the like, thereby enabling the realization of a high-capacity, high-density negative electrode. The natural graphite may be generally in the form of plate-like agglomerates before being processed, and the

plate-like particles may be manufactured in the form of a sphere having a smooth surface through post-treatment processing such as particle pulverization and re-assembly process for use as an active material for manufacture of an electrode.

In an exemplary embodiment of the present specification, the pre-lithiated negative electrode may include a carbon-based active material and a silicon-based active material as the negative electrode active material, the carbon-based active material may include one or more selected from the group consisting of natural graphite and artificial graphite, and the silicon-based active material may include Si.

In an exemplary embodiment of the present specification, the pre-lithiated negative electrode may include a carbon-based active material and a silicon-based active material as the negative electrode active material, and the silicon-based active material may be included in an amount of 50 parts by weight or less, specifically 40 parts by weight or less, and more specifically 30 parts by weight or less, with respect to 100 parts by weight of the total negative electrode active material.

In an exemplary embodiment of the present specification, the negative electrode active material may include the carbon-based active material and the silicon-based active material in a weight ratio of 95:5 to 50:50, specifically 90:10 to 60:40, and more specifically 85:15 to 70:30.

In an exemplary embodiment of the present specification, when the carbon-based active material is used in an amount equal to or greater than that of the silicon-based active material, a high capacity can be secured due to the high specific capacity of the silicon-based active material while minimizing a decrease in battery life due to battery expansion during charging and discharging.

In an exemplary embodiment of the present specification, the negative electrode active material may be included in an amount of 60 parts by weight or more and 99 parts by weight or less, specifically, 70 parts by weight or more and 98 parts by weight or less, and more specifically, 80 parts by weight or more and 97 parts by weight or less, based on 100 parts by weight of the negative electrode active material layer composition.

In an exemplary embodiment of the present specification, the negative electrode conductive material is not particularly limited as long as it has conductivity without causing a chemical change in the battery. For example, graphite such as natural graphite or artificial graphite; carbon black such as acetylene black, Ketjen black, channel black, furnace black, lamp black, and thermal black; a conductive fiber such as a carbon fiber or a metal fiber; a conductive tube such as a carbon nanotube; metal powder such as fluorocarbon, aluminum, and nickel powders; a conductive whisker such as zinc oxide and potassium titanate; a conductive metal oxide such as titanium oxide; or a conductive material such as a polyphenylene derivative may be used.

Specifically, as the negative electrode conductive material according to an exemplary embodiment of the present specification, a linear conductive material may be used, and more specifically, a single-walled CNT may be used.

In an exemplary embodiment of the present invention, the content of the negative electrode conductive material may be 0.01 to 20 parts by weight, specifically 0.03 to 10 parts by weight, and more specifically 0.03 to 5 parts by weight, with respect to 100 parts by weight of the negative electrode active material layer composition.

In an exemplary embodiment of the present specification, the negative electrode binder may serve to improve adhesion between negative electrode active material particles and adhesive strength between the negative electrode active material particles and the negative electrode current collector. The negative electrode binder may be one known in the art, and non-limiting examples thereof include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylenepropylene-diene monomer (EPDM), sulfonated EPDM, styrene butadiene rubber (SBR), fluoro rubber, polyacrylamide, and materials in which hydrogen of these is substituted with Li, Na, Ca, or the like, and may also include various copolymers thereof.

In particular, the binder according to an exemplary embodiment of the present specification serves to support the negative electrode active material and the negative electrode conductive material in order to prevent distortion and structural deformation of the negative electrode structure during the volume expansion and relaxation of the silicon-based active material. All general negative electrode binders satisfying the above-described role can be applied, specifically, a styrenebutadiene rubber (SBR) and polyacrylamide (CMC) may be used.

In an exemplary embodiment of the present invention, the content of the negative electrode binder may be 1 to 30 parts by weight, specifically 2 to 20 parts by weight, and more specifically 3 to 10 parts by weight, with respect to 100 parts by weight of the negative electrode active material layer composition.

In an exemplary embodiment of the present specification, the negative electrode current collector layer may generally have a thickness of 1 μm to 100 μm. The negative electrode current collector layer is not particularly limited as long as it has high conductivity without causing a chemical change in the battery, and for example, copper, stainless steel, aluminum, nickel, titanium, fired carbon, copper or stainless steel surface-treated with carbon, nickel, titanium, silver, or the like, an aluminum-cadmium alloy, and the like may be used. In addition, the negative electrode current collector layer may have microscopic irregularities formed on a surface to enhance a bonding force of the negative electrode active

material, and may be used in various forms such as a film, a sheet, a foil, a net, a porous body, a foamed body, or a non-woven fabric body.

**<Positive Electrode>**

The lithium secondary battery according to an exemplary embodiment of the present specification includes a positive electrode.

In an exemplary embodiment of the present specification, the charge capacity (C) ($mAh/cm^2$) of the positive electrode may be 3.0 $mAh/cm^2$ or more and 4.5 $mAh/cm^2$ or less.

In the present specification, the charge capacity (C) of the positive electrode refers to a maximum charge capacity, and may be measured after fabricating a positive electrode half-cell with lithium metal as a counter electrode and performing one cycle of charging at 0.1C to 4.4 V in a CC/CV mode (a cut-off current of 0.005C) and discharging at 0.1C to 3 V in a CC mode, and the same method as the above method for fabricating a pre-lithiated negative electrode half-cell may be applied as the method for fabricating a positive electrode half-cell.

In an exemplary embodiment of the present specification, the charge capacity ($mAh/cm^2$) of the positive electrode may be 3.0 $mAh/cm^2$ or more and 4.5 $mAh/cm^2$ or less, specifically 3.5 $mAh/cm^2$ or more and 4.0 $mAh/cm^2$ or less, and more specifically 3.7 $mAh/cm^2$ or more and 3.9 $mAh/cm^2$ or less. When the charge capacity of the positive electrode falls within the above range, the charge capacity N/P ratio in an appropriate range according to an exemplary embodiment of the present specification can be satisfied, thereby ensuring excellent life performance.

In an exemplary embodiment of the present specification, the positive electrode may be one in which a positive electrode active material layer including a positive electrode active material on at least one surface of a positive electrode current collector layer is formed, and specifically may be one in which a positive electrode active material layer is formed by applying and drying a positive electrode slurry including a positive electrode active material on at least one surface of the positive electrode current collector layer.

In an exemplary embodiment of the present specification, the positive electrode may include, as the positive electrode active material, a lithium composite transition metal compound including nickel (Ni) and cobalt (Co), and further including one or more elements selected from the group consisting of Na, K, Mg, Ca, Sr, Ni, Co, Ti, Al, Si, Sn, Mn, Cr, Fe, V, and Zr.

In an exemplary embodiment of the present specification, the positive electrode may include a lithium composite transition metal compound including nickel (Ni), cobalt (Co), and manganese (Mn), as the positive electrode active material.

In an exemplary embodiment of the present specification, the positive electrode active material may be included in an amount of 60 parts by weight or more and 99 parts by weight or less, specifically, 70 parts by weight or more and 98 parts by weight or less, and more specifically, 80 parts by weight or more and 97.5 parts by weight or less, based on 100 parts by weight of the positive electrode active material layer.

In an exemplary embodiment of the present specification, the positive electrode slurry may include a positive electrode conductive material and a positive electrode binder, and may further include a thickener and a slurry solvent.

In an exemplary embodiment of the present specification, additional components such as the positive electrode current collector layer, positive electrode conductive material, positive electrode binder, thickener, and slurry solvent, and the method for manufacturing the positive electrode may be used without limitation as long as they are known in the art within the scope to which the above-described description applies.

The lithium secondary battery according to an exemplary embodiment of the present specification may further include a separator provided between the positive electrode and the pre-lithiated negative electrode, and an electrolyte solution.

In an exemplary embodiment of the present specification, the separator serves to separate the negative electrode and the positive electrode and to provide a transport path for lithium ions, in which any separator may be used as the separator without particular limitation as long as it is typically used in a secondary battery, and particularly, a separator having high moisture-retention ability for an electrolyte solution as well as a low resistance to the ion transport of electrolyte solution ions is preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric made of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

In an exemplary embodiment of the present specification, the electrolyte solution may include a non-aqueous organic solvent and a metal salt.

As the non-aqueous organic solvent, for example, an aprotic organic solvent such as N-methyl-2-pyrrolidinone,

propylene carbonate, ethylene carbonate, fluoroethylene carbonate(FEC), butylene carbonate, dimethyl carbonate, diethyl carbonate, ethyl methyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and ethyl methyl carbonate, which are cyclic carbonates, may be preferably used as they are high-viscosity organic solvents with high permittivity and thus easily dissociate lithium salts. In addition, when low-viscosity, low-permittivity linear carbonate, such as dimethyl carbonate and diethyl carbonate, is mixed and used in an appropriate ratio with the cyclic carbonate, an electrolyte solution with high electrical conductivity can be produced, and thus can be more preferably used.

In an exemplary embodiment of the present specification, the electrolyte solution may be one in which ethylene carbonate (EC), ethyl methyl carbonate (EMC), and diethyl carbonate (DEC) are used in a volume ratio of 20:10:70.

A lithium salt may be used as the metal salt, and the lithium salt is a material that is readily soluble in the non-aqueous electrolyte solution, in which, for example, one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used as an anion of the lithium salt, and specifically, $LiPF_6$ may be used as the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolytic solution for the purpose of improving life characteristics of the battery, suppressing a decrease in battery capacity, improving discharge capacity of the battery, and the like, in addition to the above-described electrolytic solution components.

According to another exemplary embodiment of the present specification, a battery module or a battery pack including the lithium secondary battery may be provided.

According to another exemplary embodiment of the present specification, a battery pack including the battery module may be provided.

According to another exemplary embodiment of the present specification, a battery module including the lithium secondary battery as a unit cell, a battery pack including the same, and a battery pack including the lithium secondary battery may be provided. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

## <Preparation Example>

## Example 1

### 1. Preparation of Pre-lithiated Negative Electrode

A negative electrode slurry was prepared by including, as a negative electrode active material, 16 kg (96.33 parts by weight) of Si (average particle diameter ($D_{50}$)): 4.6 μm) and graphite in a ratio of 15:85, including, as binders, 0.4 kg (2.41 parts by weight) of SBR (styrene butadiene rubber) and 0.2 kg (1.2 parts by weight) of CMC (carboxymethyl cellulose), and further including, as a conductive material, 0.01 kg (0.06 parts by weight) of single-walled CNTs.

The negative electrode slurry was coated on a copper foil (thickness: 8 μm) to have a charge capacity of 4.808 mAh/cm$^2$ per unit area and then dried to prepare a negative electrode active material layer.

A transfer laminate was prepared by coating, on one surface of a polyethylene terephthalate (PET) base layer, a solution containing polymethylmethacrylate (PMMA) to form a release layer, and depositing a lithium metal layer having a thickness of 5 μm on an upper portion thereof by a physical vapor deposition (PVD) method.

Thereafter, the transfer laminate was brought into contact with an upper portion of the negative electrode active material layer in a dry room, with the lithium metal layer facing the upper portion, and pressing was performed under a

pressure of 4.2 $kgf/cm^2$, resulting in preparation of a pre-lithiated negative electrode having a pre-lithiation capacity (B) of 0.165 $mAh/cm^2$.

**2. Preparation of Negative Electrode Half-Cell**

A negative electrode half-cell was prepared to measure the charge capacity (A) and the pre-lithiation capacity (B) of the pre-lithiated negative electrode.

Specifically, an electrode assembly was prepared in which the pre-lithiated negative electrode as described above was used as a working electrode, a lithium metal thin film having a thickness of 100 μm and cut into a circular shape of 1.7671 $cm^2$ was used as a counter electrode, and a polyethylene separator was interposed between the working electrode and the counter electrode.

In addition, an electrolyte solution was prepared by adding $LiPF_6$ as a lithium salt at a concentration of 1.0 M to an organic solvent in which ethylene carbonate (EC), ethyl methyl carbonate (EMC), and diethyl carbonate (DEC) were mixed in a volume ratio of 20:10:70.

The electrode assembly was accommodated into a coin-type case, and the prepared electrolyte solution was injected to prepare a coin-type negative electrode half-cell of Example 1.

- Method for measuring the charge capacity (A) of the pre-lithiated negative electrode: The negative electrode half-cell of Example 1 prepared above was subjected to one cycle of charging at 0.1C to 0.005 V in a CC/CV mode (a cut-off current of 0.005C) and discharging at 0.1C to 1.5 V in a CC mode using an electrochemical charger/discharger, and then the charge capacity was measured.
- Method for measuring pre-lithiation capacity (B):
  The pre-lithiation capacity was calculated as a difference between a charge capacity measured by performing charging at 0.1C to 0.005 V in a CC/CV mode (a cut-off current of 0.005C) for the negative electrode half-cell of Example 1 prepared above and a charge capacity measured by the same method for a pristine negative electrode half-cell prepared in the same manner as the negative electrode half-cell of Example 1 except that pre-lithiation was not performed.

**3. Preparation of Positive Electrode**

A positive electrode slurry was prepared by adding 20 kg (97.3 parts by weight) of $LiNi_{0.6}Co_{0.2}Mn_{0.2}O_2$ (average particle diameter ($D_{50}$): 4.6 μm) as a positive electrode active material, 0.25 kg (1.2 parts by weight) of carbon black as a conductive material, and 0.3 kg (1.5 parts by weight) of polyvinylidene fluoride (PVDF) as a binder to N-methyl-2-pyrrolidone (NMP) as a solvent for forming a positive electrode slurry.

The positive electrode slurry was coated on both surfaces of an aluminum current collector as a positive electrode current collector (thickness: 15 μm) to have a charge capacity of 3.896 $mAh/cm^2$ per unit area and then dried to prepare a positive electrode (thickness: 130 μm).

**4. Preparation of Positive Electrode Half-Cell**

A positive electrode half-cell was prepared to measure the charge capacity (C) of the positive electrode. A positive electrode half-cell was prepared in the same method as in the preparation of the negative electrode half-cell (see above 2.), except that the positive electrode prepared above was used as a working electrode.

- Method for measuring charge capacity (C) of positive electrode: The positive electrode half-cell of Example 1 prepared above was subjected to one cycle of charging at 0.1C to 4.4 V in a CC/CV mode (a cut-off current of 0.005C) and discharging at 0.1C to 3 V in a CC mode using an electrochemical charger/discharger, and then the charge capacity was measured.

**5. Preparation of Lithium Secondary Battery Full Cell**

A lithium secondary battery full cell was prepared by interposing a polyethylene separator between the pre-lithiated negative electrode and the positive electrode and injecting an electrolyte.

The electrolyte was prepared by adding $LiPF_6$ as a lithium salt at a concentration of 1.0 M to an organic solvent in which ethylene carbonate (EC), ethyl methyl carbonate (EMC), and diethyl carbonate (DEC) were mixed in a volume ratio of 20:10:70.

**Example 2**

A negative electrode half-cell, a positive electrode half-cell, and a lithium secondary battery full-cell of Example 2 were prepared in the same manner as in Example 1, except that pre-lithiation was performed using a lithium metal layer having a thickness of 2 μm such that the charge capacity (A) and the pre-lithiation capacity (B) of the pre-lithiated negative electrode, and the charge capacity (C) of the positive electrode satisfied the values shown in Table 1 below.

**Example 3**

A negative electrode half-cell, a positive electrode half-cell, and a lithium secondary battery full-cell of Example 3 were prepared in the same manner as in Example 1, except that pre-lithiation was performed using a lithium metal layer having a thickness of 3 μm such that the charge capacity (A) and the pre-lithiation capacity (B) of the pre-lithiated negative electrode, and the charge capacity (C) of the positive electrode satisfied the values shown in Table 1 below.

**Comparative Example 1**

A negative electrode half-cell, a positive electrode half-cell, and a lithium secondary battery full-cell of Comparative Example 1 were prepared in the same manner as in Example 1, except that pre-lithiation was not applied to the negative electrode.

**Comparative Example 2**

A negative electrode half-cell, a positive electrode half-cell, and a lithium secondary battery full-cell of Comparative Example 2 were prepared in the same manner as in Example 1, except that the negative electrode slurry of Example 1 was coated to have a charge capacity of 4.226 $mAh/cm^2$ per unit area and dried to prepare a negative electrode active material layer, and pre-lithiation was performed using a lithium metal layer having a thickness of 1 μm such that the charge capacity (A) and the pre-lithiation capacity (B) of the pre-lithiated negative electrode, and the charge capacity (C) of the positive electrode satisfied the values shown in Table 1 below.

**Comparative Example 3**

A negative electrode half-cell, a positive electrode half-cell, and a lithium secondary battery full-cell of Comparative Example 3 were prepared in the same manner as in Example 1, except that the negative electrode slurry of Example 1 was coated to have a charge capacity of 4.226 $mAh/cm^2$ per unit area and dried to prepare a negative electrode active material layer, and pre-lithiation was performed using a lithium metal layer having a thickness of 2 μm such that the charge capacity (A) and the pre-lithiation capacity (B) of the pre-lithiated negative electrode, and the charge capacity (C) of the positive electrode satisfied the values shown in Table 1 below.

The charge capacity (A) of the pre-lithiated negative electrode, the charge capacity (C) of the positive electrode, and the pre-lithiation capacity (B) measured in Examples 1 to 3 and Comparative Examples 1 to 3 are shown in Table 1 below.

In addition, since the charge capacity (A) of the pre-lithiated negative electrode obtained above is a capacity including the pre-lithiation capacity (B), the charge capacity of only the negative electrode reflecting the pre-lithiation was calculated (A - B) and is shown in Table 1 below.

[Table 1]

| | Pre-lithiation capacity (B) ($mAh/cm^2$) | Charge capacity (C) ($mAh/cm^2$) of positive electrode | Charge capacity (A) ($mAh/cm^2$) of pre-lithiated negative electrode | Charge capacity (A - B) ($mAh/cm^2$) of negative electrode reflecting pre-lithiation |
|---|---|---|---|---|
| Example 1 | 0.165 | 3.896 | 4.808 | 4.643 |
| Example 2 | 0.330 | 3.896 | 4.808 | 4.478 |
| Example 3 | 0.495 | 3.896 | 4.808 | 4.313 |
| Comparative Example 1 | 0 | 3.896 | 4.808 | 4.808 |
| Comparative Example 2 | 0.165 | 3.896 | 4.226 | 4.051 |

(continued)

| | Pre-lithiation capacity (B) (mAh/cm$^2$) | Charge capacity (C) (mAh/cm$^2$) of positive electrode | Charge capacity (A) (mAh/cm$^2$) of pre-lithiated negative electrode | Charge capacity (A - B) (mAh/cm$^2$) of negative electrode reflecting pre-lithiation |
|---|---|---|---|---|
| Comparative Example 3 | 0.330 | 3.896 | 4.226 | 3.896 |

## Experimental Examples: Capacity Retention Rate Evaluation of Lithium Secondary Battery (full cell)

The charge capacity (A) of the pre-lithiated negative electrode, the charge capacity (C) of the positive electrode, and the pre-lithiation capacity (B) measured in Examples 1 to 3 and Comparative Examples 1 to 3 were substituted into Formula 1 below to calculate the charge capacity N/P ratio (%), which is shown in Table 2 below.

[Formula 1]

$$(A - B)/C \times 100$$

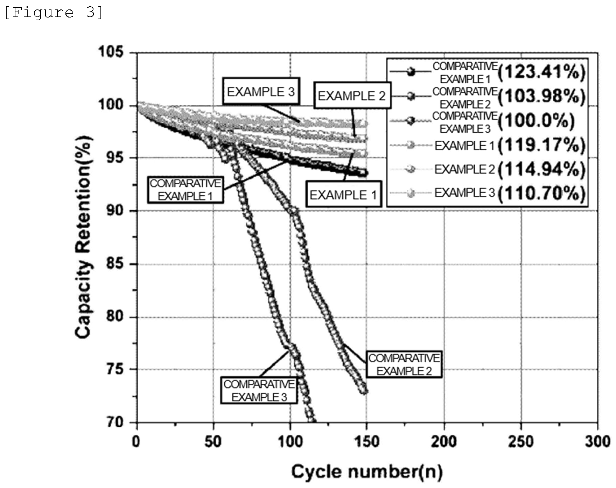

In addition, a life evaluation was performed for the lithium secondary battery full cells of Examples 1 to 3 and Comparative Examples 1 to 3. Specifically, each full cell was subjected to 150 cycles of charging at 1C to an upper limit voltage of 4.35 V in a constant current/constant voltage (CC/CV) mode with a cut-off current of 0.05C and discharging at 5C to a lower limit voltage of 2.5 V in a constant current (CC) mode using an electrochemical charger/discharger, and then a capacity retention rate was measured and is shown in Table 2 below and FIG. 3.

capacity retention rate (%) = {(discharge capacity at Nth cycle)/(discharge capacity at first cycle)} x 100%.

[Table 2]

| | Charge capacity (A - B) (mAh/cm$^2$) of negative electrode reflecting pre-lithiation | Charge capacity (C) (mAh/cm$^2$) of positive electrode | Charge capacity N/P ratio (%) | Capacity retention rate (%) @150cycle |
|---|---|---|---|---|
| Example 1 | 4.643 | 3.896 | 119.17 | 95.43 |
| Example 2 | 4.478 | 3.896 | 114.94 | 96.84 |
| Example 3 | 4.313 | 3.896 | 110.70 | 98.24 |
| Comparative Example 1 | 4.808 | 3.896 | 123.41 | 93.63 |
| Comparative Example 2 | 4.051 | 3.896 | 103.98 | 73.02 |
| Comparative Example 3 | 3.896 | 3.896 | 100 | 58.98 |

According to Table 2 and FIG. 3, in the full cell of Comparative Example 1 having a value exceeding the range of the charge capacity N/P ratio (%) expressed by Formula 1 above, lithium plating did not occur, but it can be confirmed that energy loss increased due to an increase in resistance and the life performance deteriorated.

In the full cells of Comparative Examples 2 and 3 having values below the range of the charge capacity N/P ratio (%) expressed by Formula 1 above, it can be confirmed that capacity reversal between the positive electrode and the negative electrode occurred due to tolerances generated during a process, that overcharging occurred in regions where the capacity reversal between the positive electrode and the negative electrode occurred, and that lithium ions not used on a surface of the negative electrode were plated as metal (Li-plating) as a result of the overcharging, thereby causing rapid life degradation.

However, it can be confirmed that the full cells of Examples 1 to 3 satisfying the range of the charge capacity N/P ratio (%) expressed by Formula 1 according to an exemplary embodiment of the present specification did not exhibit lithium plating and exhibited appropriate resistance, and thus exhibited excellent life performance, as compared with the full cells of Comparative Examples 1 to 3 that did not satisfy the range.

In conclusion, the lithium secondary battery according to an exemplary embodiment of the present specification

can secure excellent life performance by satisfying a charge capacity N/P ratio (%) expressed by Formula 1, which is defined in consideration of a charge capacity of a negative electrode reflecting pre-lithiation, within a range of 108% or more and 123% or less, thereby preventing lithium plating caused by capacity reversal between the positive electrode and the negative electrode or an increase in resistance.

<Explanation of Reference Numerals and Symbols>

10: negative electrode current collector layer
20: negative electrode active material layer
30: separator
40: positive electrode active material layer
50: positive electrode current collector layer
100: pre-lithiated negative electrode
200: positive electrode

## Claims

**1.** A lithium secondary battery comprising:

a pre-lithiated negative electrode; and
a positive electrode, wherein
a charge capacity N/P ratio (%) expressed by Formula 1 is 108% or more and 123% or less:

[Formula 1]

$$(A - B)/C \times 100$$

in Formula 1 above,
A is a charge capacity ($mAh/cm^2$) of the pre-lithiated negative electrode,
B is a pre-lithiation capacity ($mAh/cm^2$) of the pre-lithiated negative electrode, and
C is a charge capacity ($mAh/cm^2$) of the positive electrode.

**2.** The lithium secondary battery of claim 1, wherein the charge capacity ($mAh/cm^2$) of the pre-lithiated negative electrode is 3.5 $mAh/cm^2$ or more and 6.0 $mAh/cm^2$ or less.

**3.** The lithium secondary battery of claim 1, wherein the pre-lithiation capacity ($mAh/cm^2$) of the pre-lithiated negative electrode is 0.1 $mAh/cm^2$ or more and 1.0 $mAh/cm^2$ or less.

**4.** The lithium secondary battery of claim 1, wherein

the lithium secondary battery has a capacity retention rate of 94% or more after 150 charge and discharge cycles, and
during the charge and discharge cycles, charging is performed at 1C to an upper limit voltage of 4.35V in a constant current/constant voltage (CC/CV) mode with a cut-off current of 0.05C, and discharging is performed at 5C to a lower limit voltage of 2.5V in a constant current (CC) mode.

**5.** The lithium secondary battery of claim 1, wherein

the pre-lithiated negative electrode comprises, as a negative electrode active material, a carbon-based active material, and a silicon-based active material, and
the silicon-based active material is included in an amount of 50 parts by weight or less with respect to 100 parts by weight of the total negative electrode active material.

**6.** The lithium secondary battery of claim 1, wherein the pre-lithiated negative electrode is pre-lithiated by transferring a lithium metal layer onto one surface of a negative electrode active material layer.

**7.** A battery module comprising the lithium secondary battery of any one of claims 1 to 6.

**8.** A battery pack comprising the lithium secondary battery of any one of claims 1 to 6.

**9.** A battery pack comprising the battery module of claim 7.

**10.** A method for manufacturing a lithium secondary battery, comprising:

preparing a pre-lithiated negative electrode; and
preparing a positive electrode, wherein
a charge capacity N/P ratio (%) expressed by Formula 1 is 108% or more and 123% or less:

[Formula 1]

$$(A - B)/C \times 100$$

in Formula 1 above,
A is a charge capacity ($mAh/cm^2$) of the pre-lithiated negative electrode,
B is a pre-lithiation capacity ($mAh/cm^2$) of the pre-lithiated negative electrode, and
C is a charge capacity ($mAh/cm^2$) of the positive electrode.

**11.** The method of claim 10, wherein

the preparing a pre-lithiated negative electrode comprises
bringing a transfer laminate comprising a lithium metal layer and a base layer into contact with the negative electrode active material layer such that the lithium metal layer comes into contact with at least one surface of the negative electrode active material layer,
pressing the negative electrode active material layer in contact with the transfer laminate,
aging the negative electrode active material layer in contact with the transfer laminate, and
removing the base layer from the transfer laminate.

[Figure 1]

10
20
30
40
50
100
200

[Figure 2]

START
BRING TRANSFER LAMINATE INCLUDING LITHIUM METAL LAYER AND BASE LAYER INTO CONTACT WITH NEGATIVE ELECTRODE ACTIVE MATERIAL LAYER SUCH THAT LITHIUM METAL LAYER COMES INTO CONTACT WITH ONE SURFACE OF NEGATIVE ELECTRODE ACTIVE MATERIAL LAYER
S1
PRESS NEGATIVE ELECTRODE ACTIVE MATERIAL LAYER IN CONTACT WITH TRANSFER LAMINATE
S2
AGE NEGATIVE ELECTRODE ACTIVE MATERIAL LAYER IN CONTACT WITH TRANSFER LAMINATE
S3
REMOVE BASE LAYER FROM TRANSFER LAMINATE
S4
END

[Figure 3]

Capacity Retention(%)
Cycle number(n)
105
100
95
90
85
80
75
70
0
50
100
150
200
250
300
COMPARATIVE EXAMPLE 1 (123.41%)
COMPARATIVE EXAMPLE 2 (103.98%)
COMPARATIVE EXAMPLE 3 (100.0%)
EXAMPLE 1 (119.17%)
EXAMPLE 2 (114.94%)
EXAMPLE 3 (110.70%)
EXAMPLE 3
EXAMPLE 2
COMPARATIVE EXAMPLE 1
EXAMPLE 1
COMPARATIVE EXAMPLE 2
COMPARATIVE EXAMPLE 3

**TRANSLATION**

## INTERNATIONAL SEARCH REPORT

International application No. **PCT/KR2025/019550**

**A. CLASSIFICATION OF SUBJECT MATTER**

**H01M 10/0525**(2010.01)i; **H01M 4/36**(2006.01)i; **H01M 4/587**(2010.01)i; **H01M 4/38**(2006.01)i; **H01M 4/133**(2010.01)i; **H01M 4/134**(2010.01)i; **H01M 4/04**(2006.01)i; **H01M 10/058**(2010.01)i; **H01M 50/204**(2021.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 10/0525(2010.01); H01M 10/052(2010.01); H01M 10/058(2010.01); H01M 4/139(2010.01); H01M 4/1393(2010.01); H01M 4/38(2006.01); H01M 4/505(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 전리튬화(pre-lithiation), 리튬 이차 전지(lithium secondary battery), 충전용량(charging capacity), 리튬 플레이팅(lithium plating), N/P ratio

**C. DOCUMENTS CONSIDERED TO BE RELEVANT**

| Category* | Citation of document, with indication, where appropriate, of the relevant passages | Relevant to claim No. |
|---|---|---|
| A | CN 114335493 A (GENERAL AUTOMOBILE BALL-SURROUNDING SCIENCE AND TECHNOLOGY OPERATION LIMITED-RESPONSIBILITY COMPANY) 12 April 2022 (2022-04-12) claims 1, 6; paragraphs [0020], [0028], [0031], [0037], [0041], [0046] [0047], [0063], [0081]-[0083], [0091]-[0094], [0121] | 1-11 |
| A | KR 10-2022-0025321 A (LG ENERGY SOLUTION, LTD.) 03 March 2022 (2022-03-03) abstract; claims 1-12 | 1-11 |
| A | KR 10-2017-0111513 A (UNIST(ULSAN NATIONAL INSTITUTE OF SCIENCE AND TECHNOLOGY)) 12 October 2017 (2017-10-12) abstract; claims 1-21 | 1-11 |
| A | KR 10-2022-0142638 A (HYUNDAI MOTOR COMPANY et al.) 24 October 2022 (2022-10-24) abstract; claims 1-15 | 1-11 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **10 March 2026** | **10 March 2026** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

TRANSLATION

INTERNATIONAL SEARCH REPORT

International application No.
**PCT/KR2025/019550**

**C. DOCUMENTS CONSIDERED TO BE RELEVANT**

| Category* | Citation of document, with indication, where appropriate, of the relevant passages | Relevant to claim No. |
|---|---|---|
| A | KR 10-2023-0010171 A (LG ENERGY SOLUTION, LTD.) 18 January 2023 (2023-01-18) abstract; claims 1-11 | 1-11 |

Form PCT/ISA/210 (second sheet) (July 2022)

TRANSLATION

**INTERNATIONAL SEARCH REPORT**
**Information on patent family members**

International application No.
**PCT/KR2025/019550**

| Patent document cited in search report | Publication date (day/month/year) | Patent family member(s) | Publication date (day/month/year) |
|---|---|---|---|
| CN 114335493 A | 12 April 2022 | CN 114335493 B | 19 July 2024 |
| | | US 11626591 B2 | 11 April 2023 |
| | | US 2022-0102725 A1 | 31 March 2022 |
| KR 10-2022-0025321 A | 03 March 2022 | None | |
| KR 10-2017-0111513 A | 12 October 2017 | KR 10-1865381 B1 | 07 June 2018 |
| KR 10-2022-0142638 A | 24 October 2022 | None | |
| KR 10-2023-0010171 A | 18 January 2023 | EP 4243123 A1 | 13 September 2023 |
| | | EP 4243123 A4 | 30 October 2024 |
| | | EP 4243123 B1 | 21 May 2025 |
| | | JP 2024-500141 A | 04 January 2024 |
| | | JP 7625331 B2 | 03 February 2025 |
| | | KR 10-2698878 B1 | 27 August 2024 |
| | | US 2023-0021692 A1 | 26 January 2023 |
| | | WO 2023-282683 A1 | 12 January 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240191357